# EUROPEAN PATENT APPLICATION

(11) **EP 0 952 721 A2**
(43) Date of publication of application: **27.10.1999**
(21) Application number: 99105733.2
(22) Date of filing: 22.03.1999
(51) Int. Cl.: H04M 1/56, G09G 3/20

(54) **Intelligent display**

(30) Priority: 24.04.1998 US 66267
(71) Applicant: Siemens Information and Communication Networks, Boxa Raton, Florida 33487 (US)
(72) Inventor: Kucmerowski, Dennis L., Delray Beach, FL 33445 (US)
(74) Representative: Allen, Derek

(57) **Abstract**

A Method for displaying a message having a predetermined length on a display having a smaller size than said message is disclosed. The method comprising the steps of:
displaying a part of the message starting with the first character of the message on the display, whereby this part has the length of said display;
displaying the last character of said part of the message with a predetermined attribute indicating the message is longer than the display length; and
upon a predetermined event clearing the display and displaying the truncated part of the message, whereby if the truncated part of the message is longer than the display length steps a) through c) are repeated for the truncated part.

## Description

### BACKGROUND OF THE INVENTION

The present invention is related to an intelligent display and, in particular, to a method for displaying a message having a predetermined length on a display having a smaller size than said message. Telephones or other devices are usually equipped with a display to show information to the user. A public branch exchange (PBX), a telecommunication network system, or the telephone itself usually are generating messages which are to be displayed on such a display. A terminal, such as a low cost telephones, wireless telephones, or cordless telephones often may have a smaller display than the display equipped in a terminal which is usually used in such a system. For example, a regular terminal can be a telephone being in desk sets or wall mounted which have display hardware which fits the form of the device. The display is often typically a liquid crystal display (LCD) in a single line display of 24 characters per line. Some proprietary telephones may have two lines of display with each line being 24 characters. Cordless/wireless mobile telephones have the dialing keypad, other keys and display in the handset. The display hardware has to fit into the handset form and therefore is typically an LCD in a one-line display of 8 characters per line or two-line display by 8 characters per line. Low cost stationary terminals might have a similar display hardware.

Displaying large amounts of information, for example 24 characters, on a device or telephone which supports a small number of display characters can make it very difficult for the user to decipher the information. This especially becomes apparent when the most important information to be viewed is in the last character to be displayed, for example, the last digits of a telephone number. In this case, both characters viewed in the previous display and new characters to be viewed may be in that display. The user must determine which characters were previously viewed which may be difficult in the case of long digits or characters.

### SUMMARY OF THE INVENTION

It is therefore an object of the present invention to provide a method that can be implemented in the telephone or device having a display with a smaller size/length than the length of a message to be displayed.

This object is achieved by the steps of (a) displaying a part of the message starting with the first character of said message on the display, said part having the length of said display; (b) displaying the last character of said part of said message with a predetermined attribute indicating the message is longer than the display length; (c) upon a predetermined event clearing said display and displaying the truncated part of said message, whereby if said truncated part of said message is longer than said display steps a) through c) are repeated for the truncated part.

A further method for displaying a message having n characters on a display having m characters, whereby n > m comprises the steps of: (a) displaying the first m characters of the message on the display, whereby the last x characters of said m characters are displayed with a predetermined attribute, whereby x is equal 1 if the truncated part of said message is greater than m and x is m minus the number of truncated characters else; (b) upon a predetermined event clearing said display and displaying the truncated part of said message, whereby if said truncated part of said message is longer than said display steps a) and b) are repeated for the truncated part.

The information displayed in such a way according to the present invention allows the user to read and decipher information in a easy comprehensible manner without the necessity to scroll forwards and backwards within the display to verify the content of the message. This is achieved by means of a marker marking the splitting point of the message and if necessary showing the number of characters which are still available or have not been seen yet. When viewing telephone numbers, the last set of digits is normally the most important portion of the digit string, for example office code and station number. Therefore viewing those digits in the last string to be displayed is very advantageous. The present invention provides a method of filling the last display with previously shown characters/digits, thus providing the most displayable information that is possible.

### BRIEF DESCRIPTION OF THE DRAWINGS

Fig. 1 shows a block diagram of a system according to the present invention;
Fig. 2 shows various displays for a 24 character display;
Figs. 3 through 7 show the messages of Fig. 2 on different kinds of displays according to the present invention; and
Fig. 8 shows a flow chart according to the method of the present invention.

### DESCRIPTION OF THE PREFERRED EMBODIMENT

To emulate a standard display on a custom display, whereby the standard display has m characters and the custom display has n characters, whereby n>m, a method for displaying and marking these displays is used which is performed, for example, by a microprocessor. The present invention therefore uses a method to display markers, for example, by means of changing attributes of specific characters, which allow the user to view and comprehend information at a quicker rate making less errors. Thereby, a simple procedure is established which can be implemented in the telephone or device interface circuit that drives the device. To achieve this, the display string is examined for total character count and a decision made as to which characters will be marked. Markers can be in the form of displaying a character reverse video (white or black), a different color background, underlined, or any other way that distinguishes that character from the other being displayed. Markers are used to indicate to the user there is more information present and/or what portion of the information shown has already been viewed on the previous display. To maintain simplicity and to keep real time consumption low, no attempt is made to parse display contents on the display lines. In other words, no characters are omitted and no string is abbreviated.

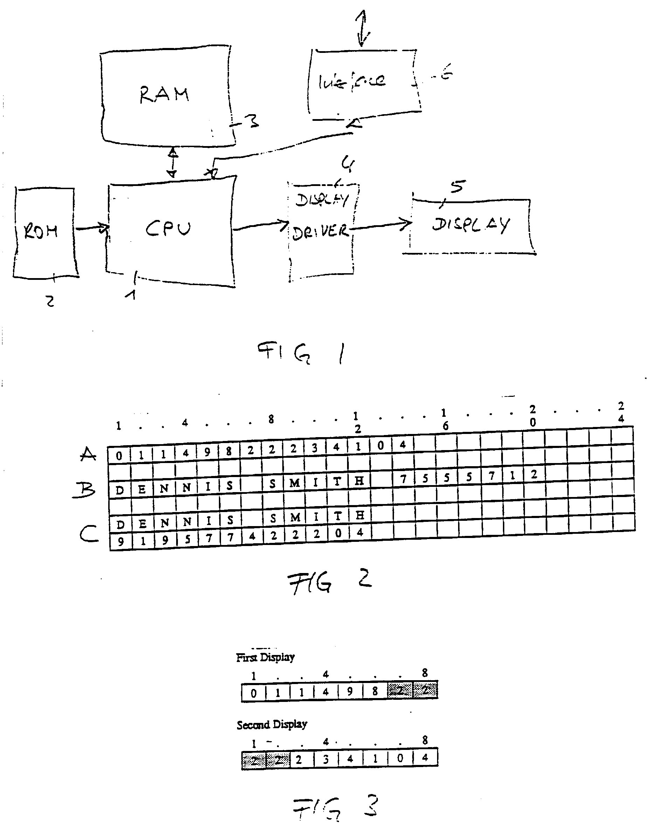

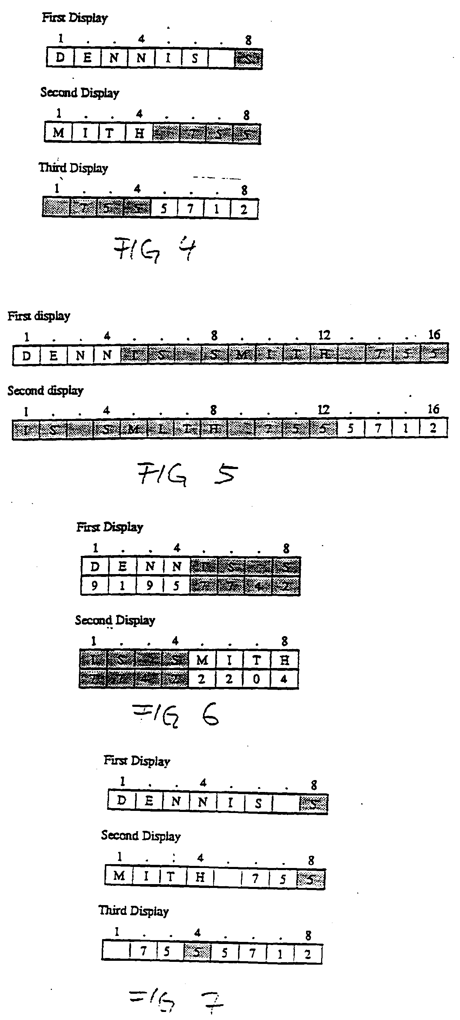

Fig. 1 shows an arrangement capable of performing the method according to the present invention. A central processing unit (CPU) 1 is coupled with a random access memory (RAM) 3 and a read only memory (ROM) 2. CPU 1 is controlling a display driver 4 which drives a display 5. ROM 2 contains a program which is performed by CPU 1. CPU 1 is also coupled with an interface 6 to receive data from a host or other system in a serial or parallel manner. During execution of such a program, data might be received through interface 6, upon which a message display routine might be performed. The message can be stored in ROM 2 or might be received as a data sequence through interface 6. This message which has to be displayed is designed for a specific display having, for example, n characters. For example, Fig. 2 shows three different messages, whereby message A and B are designed for a one line, 24 character display and message C is designed for a two line, 24 character display. Display 5 can be a display in a low cost telephone or a wireless/cordless telephone having one line and 8 characters.

The following assumes that display characters/numbers are handled in a serial manner with character 1 being the most significant character as shown in Fig. 2. Display markers are characters with the character attribute modified, for example underlined, reverse video, bold, italic, highlighted by color, etc. This attribute modification is used to indicate more information to be displayed or characters already viewed in the previous display. The method according to the present invention includes the following basic character marker rules:
- Rule 1:: All characters/numbers are analyzed one at a time, starting with character 1.
- Rule 2:: A character counter, starting at zero, is incremented for each character including leading blanks, but not including trailing blanks.
- Rule 3:: If the number of characters in the character string is equal to or less than the hardware display, the character string is displayed as the first display; no display markers are required.
- Rule 4:: If information to be displayed is longer than the hardware display, the first characters of the character string equal to the number of characters of the hardware display are displayed as the "first display". Markers, for example characters in reverse video, are then placed at the end of the characters displayed based on the following marking rules.
Marking rules:
- Rule 5:: The last character of the first display is marked, for example with a reverse video attribute, indicating that more characters are available and the second display will contain the remaining characters with no display markers;
OR
- Rule 6:: If the number of characters not yet displayed is equal to the hardware display length, the last character of the first display is marked, for example in reverse video. The second display will contain the remaining characters with no display markers.
- Rule 7:: If the number of characters not yet displayed is less than the hardware display length, the first display is marked starting at the last character of the first display. The number of characters marked will be equivalent to the number of characters that will be displayed and viewed a second time by the user when the user views the second display. In other words, the number of unmarked characters is equal to the number of characters not yet displayed. The second display will contain the remaining not yet displayed characters plus previous viewed characters, starting with the last character displayed, the number of total characters to be equal to the hardware display. In both the first display and second display, markers will be placed on the characters that will be viewed in both the first and second display.
- Rule 8:: If the number of characters not yet displayed is greater than the hardware display length, the rules for the second and third display are those stated in Rules 5, 6 and 7, with text first display replaced with the text of the second display and with text of the second display being replaced with text of the third display.
- Rule 9:: For text strings that are larger than that described above, the progression continues following Rules 5, 6 and 7 for subsequent displays.
Other Rules:
- Rule 10:: If a message designed for more than one line is displayed on a display having less lines or only one line of characters a space is inserted between the last character of one line and the first character of the following line.

Other variations of rules for character markers can be implemented. The idea is that a marker can be used to indicate additional information that can be viewed and in a further embodiment that a marker can indicate which information was viewed in the previous display. Some possible variations are described as follows:
- Variation 1 to Rule 7:: If the number of characters not yet displayed is less than the hardware display length, the only last character of the first display is marked, indicating that there is additional information to be viewed. The second display will contain the remaining not yet displayed characters plus previous viewed characters, starting with the last character displayed, the number of total characters to be equal to the length of the hardware display. In the second display, markers will be placed on the characters that were previously viewed in the first display. This variation of the rules is followed for subsequent displays as stated in Rules 6, 8 and 9.
- Variation 2 to Rule 7:: If the number of characters not yet displayed is less than the hardware display length, only the last character of the first display is marked, indicating that there is additional information to be viewed. The second display will contain the remaining not yet displayed characters plus previous viewed characters, starting with the last character displayed, the number of total characters to be equal to the hardware displayed. In the second display, a single marker will be placed on the last character viewed on the previous display. The user would then know where they left off from the previous display. This variation of rules is followed for subsequent displays as stated in Rules 6, 8 and 9.
- Variation to Rule 8:: If the number of characters not yet displayed is greater than the hardware display length, the rules for the second and following display are those stated in Rules 5 and 6, with text of the "first display" replaced with the text of the "second display" and so on, whereby in addition the first character of the "middle displays" is marked indicating that there is more information in a "previous display". This additional marking does not apply for the "first display" and the "last display",

Fig. 8 shows a flowchart for a program performing Rules 1-4 and 6-9. In step 100, the message is fetched and a pointer key is set to 1, pointing at the first character of the message. In step 101, the character indicated by pointer P is displayed and pointer P is incremented. At step 103, it is checked whether pointer P has exceeded the display length. If not, it is checked in step 102 whether the end of the message has been reached. If not, the program continues with step 101. If the pointer has been incremented beyond the display length in step 103, it is checked in step 104 whether the remaining part of the message is greater than the display length m. If not, then a variable X is set to the display length minus the number of characters in the remaining part of the message in step 106. If yes, in step 104, then X is set to 1 and the program continues with step 107. In step 107, the attribute for the last X characters of the display is changed, for example, into reverse video, underlined, etc. In step 108, the program waits for an event. This event can be, for example, pressing a button on the device by the user, or elapsing of predefined time period, etc. In step 109, it is determined whether a scroll forward or backward display routine is performed. This step analyzes, for example, whether a forward or backward key has been pressed or during an automatic display with a predetermined display period whether the end of the message has been displayed and the next display has to be the beginning of the message. These steps set the respective pointers to the respective parts of the original message. If a scroll forward decision has been made in step 109, then in step 111, the message text will be replaced by the remaining part and the program continues with step 100. If, in step 109, a scroll backward decision has been made, then the message will be replaced with the part previously shown and the program continues with step 100.

Fig. 3 shows a first and second display of Message A according to Fig. 2 which is displayed on a 1 line, 8 character display 5. Message A contains 14 digits and according to Rules 4 and 7, the first eight digits (characters 1 to 8 in FIG. 2) are displayed as the "first display" whereby the last two digits are displayed in reverse video. According to Rule 7, the number of characters to be placed in the "second display" is calculated. In this example, the last 2 characters are displayed in reverse video to indicate to the user that in the second display 6 more characters (characters 9 to 14 in FIG. 2) will be displayed. In the following step, when the user scrolls to the "second display", the second set of characters is displayed which includes the two last previously viewed characters and the 6 characters that were not displayed in the first display. The previous viewed 2 characters are marked in reverse video.

On a 1 line, 8 character display Message B, according to Fig. 2, is displayed in the manner shown in Fig. 4. The "first display" shows the first 8 characters, whereby the last character is marked in reverse video, indicating that at least 7 more characters will be displayed. If the user scrolls to the "second display", characters 9-16 of Message B are displayed, whereby the last 4 characters are displayed in reverse video indicating that 4 more characters will be displayed in the "following display". If the user scrolls to the "third display", then the last 4 characters of the "second display" and the last 4 characters at positions 17-20 of Message B are displayed, whereby the first 4 characters are displayed in reverse video, indicating that these 4 characters have been viewed in the "second display".

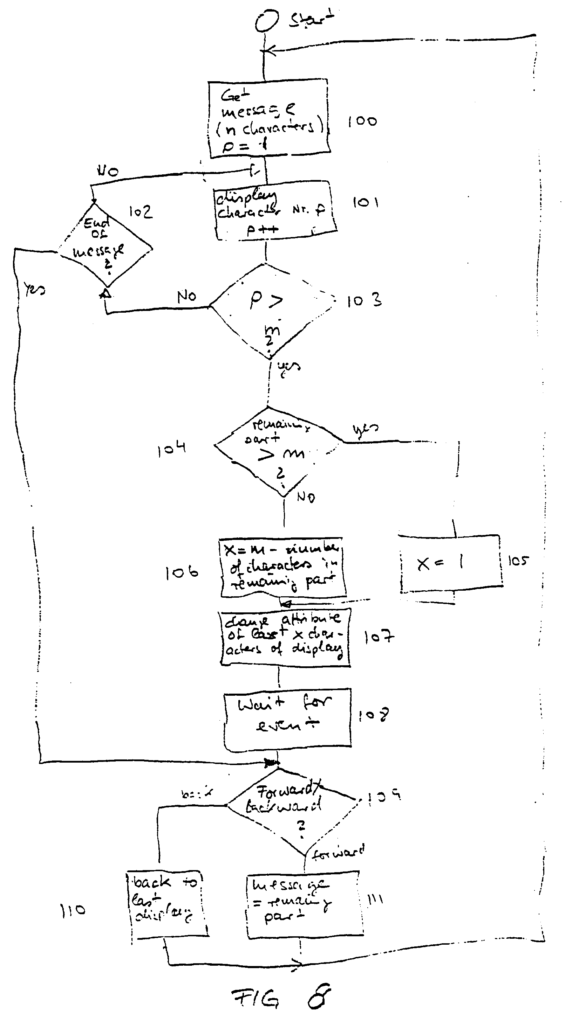

On a 16 character display, the same Message B, as shown in Fig. 2, would be displayed as shown in Fig. 5. The "first display" would display the first 16 characters of Message B, whereby the last 12 characters will be displayed in reverse video indicating that 4 more characters will be displayed in the "second display". The "second display" would display the last 12 characters of the "first display" in reverse video and the last 4 characters starting with character 17-20 of Message B.

In a similar way, Message C according to Fig. 2 would be displayed on a two line display with 8 characters as shown in Fig. 6. The same rules are executed for both lines as has been described with Fig. 3. The first 8 characters of both lines are displayed in the "first display", whereby the last 4 characters of each line are displayed in reverse video indicating that 4 more characters will be displayed in the second display. The "second display" shows the last 4 characters of each line in addition to the remaining 4 characters starting at position 9 of Message C.

If the device uses only a one line display with 8 characters, Fig. 7 shows how a single line message, according to Fig. 2, Message B, will be displayed on such a display. The method used in Fig. 7 is variation 2 which uses markers to indicate more information and a single marker in the "last display" to indicate the last character read in the "previous display". Therefore, the "first display" shows the first 8 characters of line 1 of Message B whereby the last character is marked, indicating more information. The "second display" shows the next 8 characters. The last character in the "second display" is also marked indicating that more information is available. The "third display" shows the four last characters of the "second display" and the remaining 4 characters of the second line of Message B. The last character of the "second display" is displayed in reverse video on the "third display" showing the user where the new information in the "third display" begins.

The marking rules are based on keeping the processing that must be done simple, for example, determine whether more information must be displayed above and beyond the first display, and determine the number of characters to be displayed and which characters will be re-displayed or viewed again, in subsequent displays. This then determines, based on the marking rules, which characters in the display will be marked.

The invention describes using markers for display and examples are given for certain sized displays. The same rules can be expanded to different sized input displays with more or fewer characters to be displayed into different sized output displays with one or more display lines, each having the same number of characters. The limitations of such expansion is that the marker rules apply to changing a long display to a number of lines of shorter displays. The marking of characters and the thereby included information can be achieved in many different ways. As has been described, the number of marked characters can, for example, indicate the number of previously seen characters in the "next display". Of course, it is also possible to mark as many characters as are not yet displayed. Also, any characters in a "first display" can be marked, indicating by the number of marked characters, for example, the number of characters not yet displayed.

## Claims

1. Method for displaying a message having a predetermined length on a display having a smaller size than said message; the method comprising the steps of:
displaying a part of the message starting with the first character of said message on the display, said part having the length of said display;
displaying the last character of said part of said message with a predetermined attribute indicating the message is longer than the display length; and
upon a predetermined event clearing said display and displaying the truncated part of said message, whereby if said truncated part of said message is longer than said display length steps a) through c) are repeated for the truncated part.

2. Method according to claim 1, wherein displaying the truncated part which has less characters than m includes the step of displaying the truncated part including as many preceding characters as possible.

3. Method according to claim 2, wherein the first preceding character is displayed with a predetermined attribute.

4. Method according to claim 2, wherein the all preceding characters are displayed with a predetermined attribute.

5. Method according to claim 1, wherein in step b) as many characters are displayed with a predetermined attribute as are left in the truncated part.

6. Method according to claim 1, wherein in step b) as many characters are displayed without a predetermined attribute as are left in the truncated part.

7. Method according to claim 1, wherein displaying the truncated part which has more or equal characters than said display size includes the step of displaying the truncated part whereby in addition the first character is displayed with a predetermined attribute.

8. A method for displaying a message having n characters on a display having m characters, whereby n > m; the method comprising the steps of:
displaying the first m characters of the message on the display, whereby the last x characters of said m characters are displayed with a predetermined attribute, whereby x is equal 1 if the truncated part of said message is greater than m and x is m minus the number of truncated characters else;
upon a predetermined event clearing said display and displaying the truncated part of said message, whereby if said truncated part of said message is longer than said display length steps a) and b) are repeated for the truncated part.

9. Method according to claim 8, wherein displaying the truncated part which has less characters than m includes the step of displaying the truncated part including as many preceding characters as possible.

10. Method according to claim 8, wherein the first preceding character is displayed with a predetermined attribute.

11. Method according to claim 10, wherein all preceding characters are displayed with a predetermined attribute.

12. A method for displaying a message having n characters on a display having m characters, whereby n > m; the method comprising the steps of:
displaying the first m characters of the message on the display, whereby x characters of said m characters are displayed with a predetermined attribute, whereby x is equal 1 if the truncated part of said message is greater than m and x is the number of truncated characters else;
upon a predetermined event clearing said display and displaying the truncated part of said message, whereby if said truncated part of said message is longer than said display length steps a) and b) are repeated for the truncated part.

13. Method according to claim 12, wherein displaying the truncated part which has less characters than m includes the step of displaying the truncated part including as many preceding characters as possible.

14. Method according to claim 13, wherein the preceding character to the immediate left of the new characters is displayed with a predetermined attribute.

15. Method according to claim 13, wherein all preceding characters are displayed with a predetermined attribute.
